# EUROPEAN PATENT SPECIFICATION

(11) **EP 3 412 920 B1**
(45) Date of publication and mention of the grant of the patent: **26.02.2020**
(21) Application number: 18176233.7
(22) Date of filing: 06.06.2018
(51) Int. Cl.: F04F 5/20, F04F 5/44, F04B 39/00

(54) **SILENCER AND EJECTOR IN WHICH SILENCER IS USED**
SCHALLDÄMPFER UND EJEKTOR, IN DEM DER SCHALLDÄMPFER VERWENDET WIRD
SILENCIEUX ET ÉJECTEUR DANS LEQUEL LE SILENCIEUX EST UTILISÉ

(30) Priority: 09.06.2017 JP 2017114261
(43) Date of publication of application: 12.12.2018
(73) Proprietor: SMC Corporation, Tokyo 101-0021 (JP)
(72) Inventor: NAKAYAMA, Toru, Ibaraki, 300-2493 (JP); SUGANO, Koji, Ibaraki, 300-2493 (JP); ENOMOTO, Masayuki, Ibaraki, 300-2493 (JP); YAMAMOTO, Masayoshi, Ibaraki, 300-2493 (JP)
(74) Representative: Keil & Schaafhausen Patent- und Rechtsanwälte PartGmbB

(56) References cited:
- EP-A1- 0 129 307
- JP-A- 2003 120 530
- US-A- 4 073 602
- US-A- 4 865 521
- US-A- 5 683 227
- US-A1- 2003 180 154
- US-A1- 2005 118 032
- US-A1- 2008 260 544
- US-A1- 2009 266 643
- US-A1- 2014 014 746

## Description

### BACKGROUND OF THE INVENTION

### Field of the Invention:

The present invention relates to a silencer adapted to reduce discharge noise of a pressure fluid that is discharged from a fluid pressure device, as well as to an ejector in which such a silencer is used.

### Description of the Related Art:

Conventionally, discharge noise of a pressure fluid (compressed air) that is discharged from a fluid pressure device such as an ejector is large, and therefore, by installing a silencer on the side of a discharge port of the fluid pressure device, lessening of the discharge noise can be achieved (See Japanese Laid-Open Patent Publication No. JP 2012 - 218099 A). This type of silencer is equipped with a hollow tubular portion in which a discharge flow passage is formed that communicates with the discharge port of the fluid pressure device, a sound absorbing member provided in the discharge flow passage, and a discharge port disposed at a terminal end position of the discharge flow passage.

A noise-reduction-device of JP 2003 - 120530 A for purge gas includes a release passage inside a cylindrical housing for releasing a mixed gas discharged from an ejector pump into the atmosphere. The cylindrical housing has an elongated first cylindrical portion provided with a resonance-type muffling portion and a short second cylindrical portion provided with a hollow-type muffling portion. An upper end of a second cylindrical body of the second cylindrical portion is closed with a cover plate member. The mixed gas is released into the atmosphere from release holes through the inside of the second cylindrical portion.

US 2009 / 0266643 A1 discloses a silencer including a body connected to an exhaust port of a fluid pressure device, a retaining member disposed coaxially therewith and separated a predetermined interval away from the body, a cylindrical body sandwiched between the body and the retaining member, a sound absorber disposed on an outer circumferential side of the cylindrical member for reducing exhaust noises of a pressure fluid that is discharged from the fluid pressure device, and a cylindrically shaped cover member disposed on an outer circumference of the sound absorber. Exhaust holes are formed in the cylindrical member and further plural holes are formed in the cover member. The holes in the cover member operate to discharge the pressure fluid output from the exhaust holes of the cylindrical member to the outside through the sound absorber.

US 2003 / 180154 A1 discloses a vacuum generator. A diffuser nozzle is arranged coaxial with a first nozzle and a second nozzle and is provided on a front side of the second nozzle. A silencer element is attached on an inner face of a cylinder so as to enclose a front end part of the diffuser nozzle. An air-discharge port is opened in a side face of the cylinder. The air-discharge port includes a plurality of through-holes, which are formed in the side face of the cylinder. When the compressed air is jetted from the second nozzle toward the diffuser nozzle, air is sucked into a valve chamber and discharged from the air discharge port.

A vacuum producing device according to US 4,073,602 A comprises a venturi unit, which functions to produce or stop producing a vacuum after predetermined movement of a surrounding movable sleeve and air shut-off valve and includes silencing means for reducing the sound of pressure air passing through the device. In particular, when the valve is finally cracked open, air from a passage expands into a cross-sectional area of an interior of the sleeve. This results in a sound energy absorbing and a sound attenuating effect.

### SUMMARY OF THE INVENTION

In the above-described conventional technique, a configuration is provided in which the discharge port is formed along an axial direction of the silencer, and the pressure fluid having passed through the discharge flow passage is discharged along the axial direction. Therefore, when the silencer is installed in the fluid pressure device, it is necessary to install the fluid pressure device by separating the discharge port of the silencer away from an obstacle such as a wall surface or the like, so as not to hinder the discharge from the discharge port, and thus a restriction is placed on the installation location of the fluid pressure device. Further, since the discharge port is provided in only one location, for example, in the case that the silencer is attached to the ejector, there is a problem in that performance of the suction flow rate and the vacuum pressure deteriorates when the discharge port is closed.

Thus, an object of the present invention is to provide a silencer and an ejector in which such a silencer is used, wherein the installation location of the fluid pressure device to which the silencer is attached is not restricted, discharge from the discharge port is carried out without any impediment, and discharge noise is reduced.

The above problem is solved by a silencer with the features according to claim 1 or claim 4 and an ejector according to claim 7.

The silencer of the present invention comprises a hollow tubular portion in which a discharge flow passage is formed that communicates, on one end side of the tubular portion, with a discharge port of a fluid pressure device through which a pressure fluid is discharged, a cap member attached to another end part of the tubular portion, a sound absorbing member attached to an inner wall surface of the tubular portion, and a plurality of discharge ports adapted to discharge the pressure fluid, which has passed through the discharge flow passage in an axial direction of the tubular portion, in radial directions perpendicular to the axial direction.

In accordance with the silencer of the present invention, the installation location of the fluid pressure device to which the silencer is attached is not restricted, discharge from the discharge port is carried out without any impediment, and discharge noise is reduced. More specifically, even in the case that the fluid pressure device to which the silencer is attached is installed in any arbitrary orientation, discharge gas can be discharged from the plurality of discharge ports in directions perpendicular to the axial direction of the tubular portion, while in addition, the silencer can be installed without separating the fluid pressure device a certain distance away from a wall surface or the like. Further, since the plurality of discharge ports are provided in the silencer, unlike the case in which a discharge port is provided at only one location, there is an advantage in that it is difficult for the ports to be closed from the exterior. Furthermore, since the plurality of discharge ports are dispersed and act to discharge the pressure fluid, the discharge pressure can be reduced, and the silencing effect is remarkable.

Further, in the silencer according to a first embodiment of the present invention, the plurality of discharge ports is provided in the cap member, and is oriented toward and open in the radial directions. In accordance with this feature, the discharge gas discharged from the discharge port can be discharged in directions perpendicular to the axial direction, which is helpful for reducing discharge noise.

Further, in another embodiment of the silencer of the present invention, the tubular portion includes a tubular partition wall that extends in the axial direction up to a vicinity of the cap member and partitions the discharge flow passage, and the discharge flow passage is constituted from a first discharge flow passage, a starting end of which faces toward the discharge port, and which extends to the vicinity of the cap member along a wall surface on an inner side of the partition wall, a second discharge flow passage adapted to change a flow direction from a terminal end part of the first discharge flow passage toward an outer side in the radial direction, and which is folded back on an opposite side of the cap member in the axial direction along the inner wall surface of the cap member, and a third discharge flow passage that extends from a terminal end part of the second discharge flow passage to the one end side of the tubular portion along a wall surface on an outer side of the partition wall, wherein the plurality of discharge ports are formed in a terminal end part of the third discharge flow passage. Consequently, since the discharge flow passage is folded back on the opposite side of the cap member, and the interval over which the sound absorbing member and the pressure fluid come into contact with each other is lengthened, the sound absorbing power can be enhanced.

Further, in the latter embodiment of the silencer of the present invention, the sound absorbing member is constituted from a first sound absorbing member disposed along the first discharge flow passage, a second sound absorbing member disposed along the second discharge flow passage and the third discharge flow passage, and a third sound absorbing member disposed in the terminal end part of the third discharge flow passage, wherein the second sound absorbing member includes a curved portion at a location corresponding to the terminal end part of the second discharge flow passage. Consequently, the silencer can be assembled by first sequentially installing the third sound absorbing member, the first sound absorbing member, and the second sound absorbing member in this order along the partition wall in the interior of the tubular portion, and thereafter, attaching the cap member. Also, disassembly of the silencer is easy to perform, and it is easy to replace the silencer in component units thereof.

In the silencer of the present invention, a sound absorbing ring having an opening with a diameter greater than an inner diameter of the sound absorbing member may be provided between the sound absorbing member and the cap member. In accordance with this feature, it is possible to further reduce discharge sounds at a position in the vicinity of the discharge ports that are formed in the cap member, without disturbing the flow of the discharge gas.

Further, in the silencer of the present invention, the tubular portion may include a clip attachment part formed in a groove shape on an outer circumferential surface of the tubular portion, and the clip attachment part may engage a clip member that is inserted into a hole formed in the fluid pressure device. In accordance with this feature, by attaching the clip member to the clip attachment part, the silencer and the fluid pressure device can be integrated, and hence it is possible to prevent the silencer from coming out from the fluid pressure device. Furthermore, using the clip member, the silencer can be easily attached to and detached from the fluid pressure device.

Further, in the silencer of the present invention, the tubular portion may include a male screw member which is screwed in and fixed with respect to a female screw member formed in the fluid pressure device. In accordance with this feature, the silencer can be easily attached and detached with respect to the fluid pressure device.

Further still, an ejector of the present invention comprises an ejector body formed with an internal space communicating with an air supply port and a suction port, a nozzle disposed in the internal space, and adapted to inject a pressure fluid supplied from the air supply port, and generate a negative pressure for sucking fluid from the suction port, a diffuser provided in the internal space on a more downstream side than the nozzle, and having a discharge port adapted to discharge the pressure fluid together with the fluid, and a silencer according to the invention facing toward the discharge port, and which is attached to the ejector body.

In accordance with the ejector of the present invention, the installation location of the ejector to which the silencer is attached is not restricted, discharge from the discharge port is carried out without any impediment, and discharge noise is reduced. More specifically, even in the case that the ejector to which the silencer is attached is installed in any arbitrary orientation, discharge gas can be discharged from the plurality of discharge ports in directions perpendicular to the axial direction of the tubular portion, while in addition, the silencer can be installed without separating the ejector a certain distance away from a wall surface or the like. Further, since the plurality of discharge ports are provided in the silencer, unlike the case in which a discharge port is provided at only one location, there is an advantage in that it is difficult for the ports to be closed from the exterior. Furthermore, since the plurality of discharge ports are dispersed and act to discharge the pressure fluid, the discharge pressure can be reduced, and the silencing effect is remarkable.

According to the present invention, it is possible to provide a silencer and an ejector using a silencer, in which the installation location of the fluid pressure device to which the silencer is attached is not restricted, discharge from the discharge port is carried out without any impediment, and discharge noise is reduced.

The above and other objects, features, and advantages of the present invention will become more apparent from the following description when taken in conjunction with the accompanying drawings, in which preferred embodiments of the present invention are shown by way of illustrative example.

### BRIEF DESCRIPTION OF THE DRAWINGS

FIG. 1 is a cross-sectional view showing a vacuum generating unit including an ejector to which a silencer according to a first embodiment is attached;
FIG. 2 is a cross-sectional view showing the ejector illustrated in FIG. 1;
FIG. 3 is a cross-sectional view taken along line III-III of the silencer and the ejector shown in FIG. 2;
FIG. 4 is a cross-sectional view taken along line IV-IV of the silencer shown in FIG. 2;
FIG. 5 is a cross-sectional view showing a silencer according to a second embodiment;
FIG. 6 is a cross-sectional view taken along line VI-VI of the silencer shown in FIG. 5;
FIG. 7 is an exploded perspective view of the silencer shown in FIG. 5; and
FIG. 8 is a cross-sectional view showing a modification of the silencer according to the first embodiment.

### DESCRIPTION OF THE PREFERRED EMBODIMENTS

Preferred embodiments of a silencer according to the present invention in relation to an ejector in which the silencer is incorporated will be described in detail below with reference to the accompanying drawings.

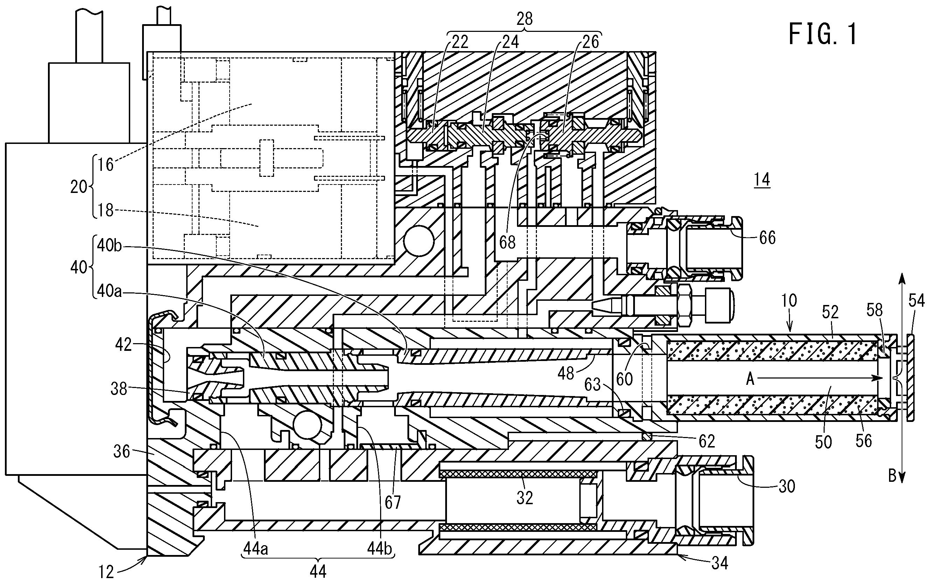

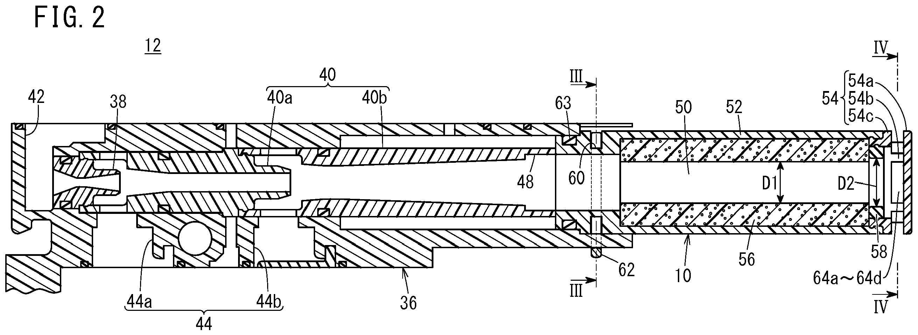

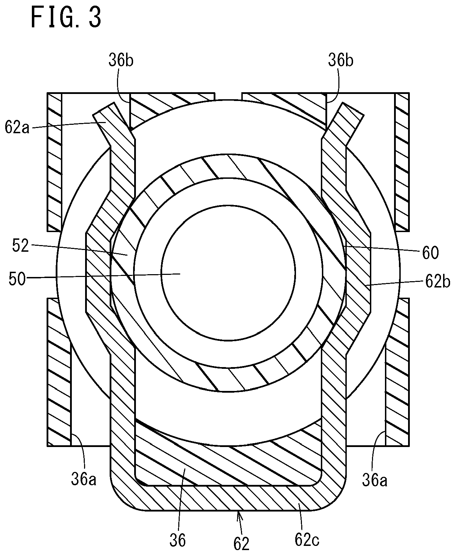

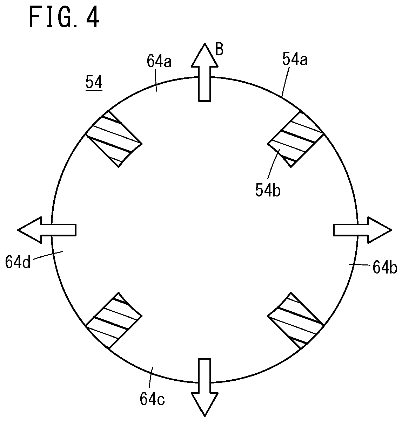

FIG. 1 is a cross-sectional view showing a vacuum generating unit 14 including an ejector 12 to which a silencer 10 according to a first embodiment is attached, FIG. 2 is a cross-sectional view showing the ejector 12 illustrated in FIG. 1, FIG. 3 is a cross-sectional view taken along line III-III of the silencer 10 and the ejector 12 shown in FIG. 2, and FIG. 4 is a cross-sectional view taken along line IV-IV of the silencer 10 shown in FIG. 2.

As shown in FIG. 1, the vacuum generating unit 14 is constituted from the ejector 12 which functions as a vacuum generating mechanism, a solenoid valve unit 20 having a vacuum breaking pilot valve 16 and a vacuum supplying pilot valve 18, a switching valve unit 28, and a filter unit 34 adapted to remove dust and the like contained within the fluid flowing from the vacuum port 30 by a filter 32 provided therein. The switching valve unit 28 includes a piston 22, a vacuum supply valve 24, and a vacuum breaking valve 26, and is switched between a vacuum generating state in which a negative pressure is generated by the piston 22 being displaced under a supply action of pilot air, and a state in which the negative pressure is released to atmospheric pressure. Between the vacuum supply valve 24 and the vacuum breaking valve 26, a spring 68 is provided for urging the vacuum supply valve 24 in a valve closing direction.

As shown in FIGS. 1 and 2, the ejector 12 includes an ejector body 36, a nozzle 38, a diffuser 40, and the silencer 10. An air supply port 42 and a suction port 44 are provided, and an internal space that communicates with these ports is formed in the ejector body 36.

The nozzle 38 is disposed between the air supply port 42 and the suction port 44 in the internal space of the ejector body 36, and ejects a pressure fluid (compressed air), which is supplied from the air supply port 42, toward the diffuser 40, to thereby generate a negative pressure for aspirating a fluid (air) leading to the vacuum port 30 from the suction port 44.

The diffuser 40 is made up from a first diffuser 40a and a second diffuser 40b arranged in tandem, and is provided on a downstream side of the nozzle 38 in the internal space of the ejector body 36. The second diffuser 40b includes a discharge port 48.

The ejector body 36 includes a first suction port 44a and a second suction port 44b which constitute the suction port 44 on the side of the filter unit 34. The first suction port 44a communicates with an internal space formed between the first diffuser 40a and the nozzle 38. The second suction port 44b communicates with an internal space formed between the first diffuser 40a and the second diffuser 40b. Between the second suction port 44b and the filter unit 34, a check valve 67 is provided, which is made of a flexible member that allows fluid to flow to the second suction port 44b from the side of the filter unit 34.

As shown in FIGS. 2 and 3, one end portion of the silencer 10 (the left end portion in FIG. 2) faces toward the discharge port 48, and the other end portion thereof (the right end portion in FIG. 2) projects outwardly from the ejector body 36. The silencer 10 includes a tubular portion 52, a cap member 54, and a sound absorbing member 56. The tubular portion 52 includes a discharge flow passage 50 that communicates with the discharge port 48 on one end side thereof. The tubular portion 52 is hollow.
The cap member 54 is disposed on the other end (the right end portion in FIG. 2) of the tubular portion 52. The sound absorbing member 56 is attached to an inner wall surface of the tubular portion 52. The sound absorbing member 56 is of a cylindrical shape, and an internal space thereof which extends in the axial direction is closed by the cap member 54. The sound absorbing member 56 is composed of a sound absorbing material which is formed in a sponge-like shape using, for example, a resin such as polyvinyl alcohol as the material thereof. Further, between the cap member 54 and the sound absorbing member 56, a sound absorbing ring 58 is provided having an opening with a diameter D2 that is greater than an inner diameter D1 of the sound absorbing member 56.

A clip attachment part 60 made up from an annular groove is formed on an outer circumferential surface of one end side of the tubular portion 52 of the silencer 10. As shown in FIG. 3, the groove shaped clip attachment part 60 engages with a substantially U-shaped clip member 62, which is inserted from a side on a distal end part 62a thereof into holes 36a, 36b formed in the ejector body 36. Bent portions 62b which are formed in the center of the clip member 62 are placed in abutment so as to sandwich a groove bottom portion of the clip attachment part 60 from left and right sides thereof. The gripping part 62c of the clip member 62 is placed in abutment against a lower surface of the ejector body 36. By attaching the clip member 62 to the clip attachment part 60, the silencer 10 and the ejector 12 can be integrated, and hence it is possible to prevent the silencer 10 from coming out from the ejector body 36. Further, an annular seal member 63 is disposed at a connecting portion between an outer circumferential surface of the tubular portion 52 and the ejector body 36, to thereby prevent outflowing of the pressure fluid between the ejector 12 and the silencer 10.

Further, as shown in FIGS. 2 and 4, the cap member 54 is made up from a disk-shaped distal end part 54a, prism-shaped parts 54b that support the distal end part 54a, and an annular connecting part 54c that supports the prism-shaped parts 54b and is fitted into the tubular portion 52. The prism-shaped parts 54b form a bridge between the distal end part 54a and the connecting part 54c, and are formed by four columnar bodies which are spaced equidistantly from each other, and as a result, four discharge ports 64a to 64d are formed thereby. The discharge ports 64a to 64d discharge the fluid, which has passed in an axial direction (straight direction) through the discharge flow passage 50, in radial directions perpendicular to the axial direction. The number of discharge ports may be of any plural number, and is not limited to four.

Next, operations and effects of the silencer 10 and the vacuum generating unit 14, which are configured in the manner described above, will be described.

When the vacuum supplying pilot valve 18 is not energized, both the vacuum supplying pilot valve 18 and the vacuum supply valve 24 are placed in a closed state. Next, when the vacuum supplying pilot valve 18 is energized by a non-illustrated power supply source, the vacuum supplying pilot valve 18 is opened, and a pilot pressure is supplied to the piston 22.

Consequently, the piston 22 moves toward the vacuum supply valve 24 (in a rightward direction in FIG. 1) and pushes the vacuum supply valve 24, thereby opening the vacuum supply valve 24. The pressure fluid (compressed air), which is supplied to an internal flow passage of the switching valve unit 28 from a supply port 66 connected to a non-illustrated pressure fluid supply source, passes through the vacuum supply valve 24 and is supplied to one end side of the nozzle 38 of the ejector 12 via the air supply port 42.

The pressure fluid supplied from the one end side of the nozzle 38 is throttled at a center portion where the inner diameter is narrowest in the nozzle 38, and thereafter, is vigorously ejected from the other end side where the inner diameter is expanded along the axial direction from the center portion.

Consequently, the speed of the pressure fluid becomes higher at the other end side of the nozzle 38 than at the one end side, and the pressure at the other end side becomes lower than the pressure at the one end side. In this case, since the ejector 12 communicates with the internal space of the filter unit 34 through the first suction port 44a that is formed in the ejector body 36, outside air is sucked in from the vacuum port 30 due to the negative pressure generated at the first suction port 44a of the ejector body 36. Therefore, the vacuum port 30 is placed in a negative pressure state. Moreover, the outside air passes through the filter 32 in the internal space of the filter unit 34 to remove fine dust and the like contained therein, and thereafter, the air is introduced into the ejector 12 from the first suction port 44a.

The first diffuser 40a ejects the pressure fluid, which is ejected from the other end of the nozzle 38, toward the second diffuser 40b together with the fluid that is sucked in from the first suction port 44a.

As a result, a negative pressure is also generated at the second suction port 44b, and in the second diffuser 40b, the pressure fluid ejected from the first diffuser 40a, together with the fluid that is sucked in from the second suction port 44b are ejected from the discharge port 48 toward the discharge flow passage 50 of the silencer 10.

When a non-illustrated workpiece is attracted, for example, to a non-illustrated suction tool that is connected to the vacuum port 30, the degree of vacuum inside the filter unit 34 and the suction tool increases. In addition, when the degree of vacuum in the internal space of the filter unit 34 becomes higher than the degree of vacuum of the second suction port 44b, the check valve 67, which is provided in the second suction port 44b, closes due to such a negative pressure difference, and therefore, the fluid ejected from the discharge port 48 becomes only the fluid that is ejected therein from the first diffuser 40a.

In the silencer 10, when the fluid ejected from the ejector 12 is supplied to the discharge flow passage 50, which is disposed along the axial direction of the tubular portion 52, the fluid moves straight forward (in the direction of the arrow A in FIG. 1) along the axial direction toward the cap member 54, while discharge sounds are absorbed by the sound absorbing member 56 provided on the inner wall surface of the tubular portion 52. The fluid that has reached the cap member 54 is discharged in directions perpendicular to the axial direction of the tubular portion 52 (in the directions of the arrows B shown in FIGS. 1 and 4) from the plurality of discharge ports 64a to 64d provided in the cap member 54 and which are oriented toward and open in the radial directions.

In addition, when supply of energy to the vacuum supplying pilot valve 18 is stopped, the restorative force of the spring 68 disposed between the vacuum supply valve 24 and the vacuum breaking valve 26 causes the vacuum supply valve 24 to return to the closed state, and since supply of the pressure fluid to the ejector 12 is stopped, generation of the vacuum is also stopped.

In the foregoing manner, in the silencer 10 according to the present embodiment, the discharge gas can be discharged from the plurality of discharge ports 64a to 64d in directions perpendicular to the axial direction of the tubular portion 52. Therefore, it is possible for the fluid pressure device to be installed without being separated a certain distance away from a wall surface or the like, and the installation location thereof is not restricted.

Further, since the plurality of discharge ports 64a to 64d are provided, unlike the case in which a discharge port is provided at only one location as in the conventional art, there is an advantage in that it is difficult for the ports to be closed. More specifically, when the vacuum generating unit 14 is attached to the ejector 12, even in the case that one location is closed, for example, it is possible to prevent a significant decrease in product performance such as the suction flow rate or the vacuum pressure.

Furthermore, since the plurality of discharge ports 64a to 64d are dispersed and act to discharge the pressure fluid, an advantage is achieved in that the discharge pressure can be reduced, and discharge noises can be reduced more so than in the case of a discharge port being provided at only one location.

Further still, in the silencer 10 according to the present embodiment, the plurality of discharge ports 64a to 64d are oriented toward and open in the radial directions in the cap member 54. In accordance with this feature, the discharge gas discharged from the discharge port 48 can be discharged in directions perpendicular to the axial direction, which is helpful for reducing discharge noise.

Further, in the silencer 10 of the present embodiment, the sound absorbing ring 58, having an opening with a diameter D2 that is greater than the inner diameter D1 of the sound absorbing member 56, is provided between the sound absorbing member 56 and the cap member 54. In accordance with this feature, it is possible to further reduce discharge sounds at a position in the vicinity of the discharge ports 64a to 64d that are formed in the cap member 54, without disturbing the flow of the discharge gas.

Further still, in the silencer 10 of the present embodiment, the tubular portion 52 includes the clip attachment part 60 formed in a groove shape on the outer circumferential surface thereof, and the clip attachment part 60 engages the clip member 62 that is inserted into the holes 36a, 36b formed in the ejector 12 (fluid pressure device). By attaching the clip member 62 to the clip attachment part 60, the silencer 10 and the ejector 12 can be integrated, and hence it is possible to prevent the silencer 10 from coming out from the ejector body 36. Furthermore, using the clip member 62, the silencer 10 can be easily attached to and detached from the ejector 12.

Next, a silencer 100 according to a second embodiment will be described. Constituent elements thereof which are the same as those of the silencer 10 according to the above-described first embodiment are denoted with the same reference numerals, and detailed description of such features is omitted.

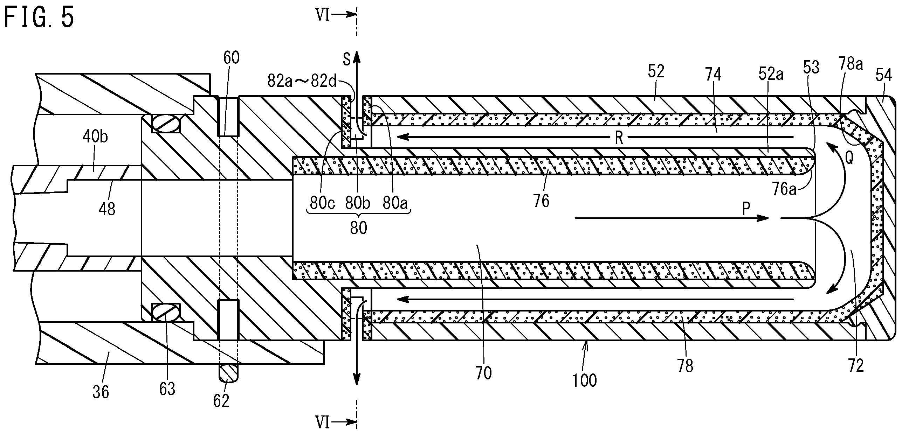

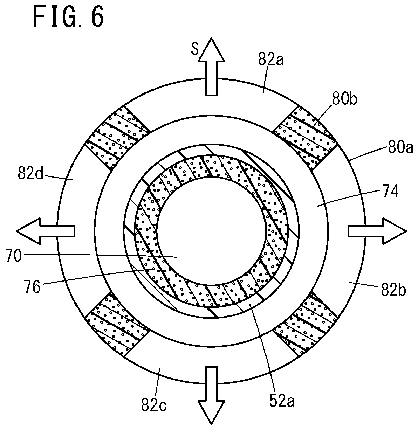

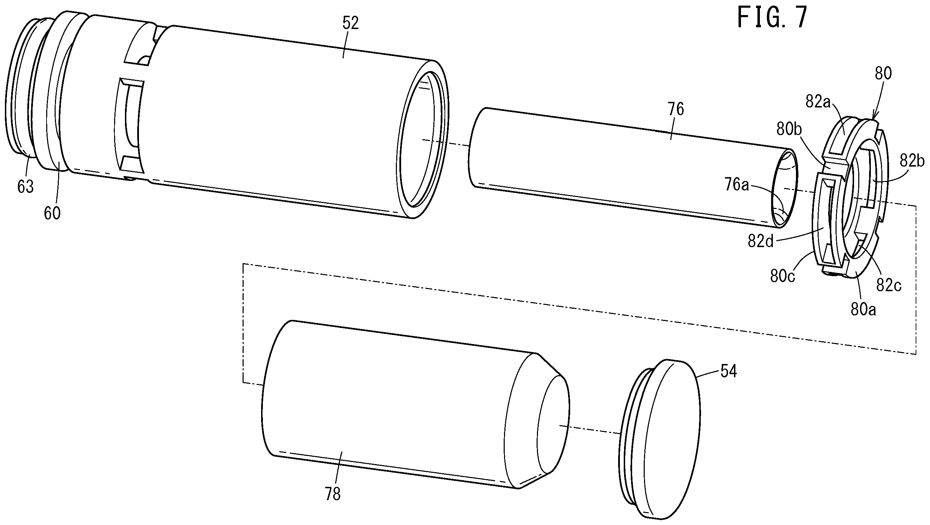

FIG. 5 is a cross-sectional view showing the silencer 100 according to the second embodiment, FIG. 6 is a cross-sectional view taken along line VI-VI of the silencer 100 shown in FIG. 5, and FIG. 7 is an exploded perspective view of the silencer 100 shown in FIG. 5. As shown in FIGS. 5 to 7, in the silencer 100 according to the present embodiment, the tubular portion 52 is in the form of a double structure, including a cylindrical shaped partition wall 52a defining a discharge flow passage along the axial direction.
Therefore, the shape of the discharge flow passage provided inside the tubular portion 52 differs from that of the first embodiment. The discharge flow passage in the present embodiment is constituted from a first discharge flow passage 70, a second discharge flow passage 72, and a third discharge flow passage 74.

As shown in FIG. 5, a starting end of the first discharge flow passage 70 faces toward the discharge port 48, and the first discharge flow passage 70 extends in the axial direction of the tubular portion 52 (in the direction of the arrow P in FIG. 5) along the inner wall surface of the partition wall 52a to the vicinity of the cap member 54. The second discharge flow passage 72 changes the flow direction from the terminal end part of the first discharge flow passage 70 toward an outer side in the radial direction of the tubular portion 52, and is folded back on an opposite side of the cap member 54 (in the direction of the arrow Q in FIG. 5) in the axial direction along the inner wall surface of the cap member 54. The third discharge flow passage 74 extends from a terminal end part of the second discharge flow passage 72 to the one end side of the tubular portion 52 in parallel with the axial direction (in the direction of the arrow R in FIG. 5) along a wall surface on an outer side of the partition wall 52a.

Further, a first sound absorbing member 76 is disposed along the first discharge flow passage 70 on a wall surface on an inner side in the radial direction of the partition wall 52a of the tubular portion 52. Further, a second sound absorbing member 78 is disposed along the second discharge flow passage 72 and the third discharge flow passage 74 on an inner wall surface on an outer side in the radial direction of the tubular portion 52 and on an inner wall surface of the cap member 54. The second sound absorbing member 78 has a curved portion 78a at a position corresponding to a terminal end part of the second discharge flow passage 72. Further, in the first discharge flow passage 70, a corner portion of the terminal end part 76a of the first sound absorbing member 76, and in the third discharge flow passage 74, a corner portion of the terminal end part 53 of the partition wall 52a are formed in rounded shapes, respectively. In addition, a third sound absorbing member 80 is disposed at a terminal end part of the third discharge flow passage 74. The first sound absorbing member 76, the second sound absorbing member 78, and the third sound absorbing member 80 are formed in sponge-like shapes using, for example, a resin such as polyvinyl alcohol as the material thereof.

Further, as shown in FIG. 7, the third sound absorbing member 80 is made up from a first annular section 80a, four connecting parts 80b, and a second annular section 80c. As shown in FIG. 5, the inner diameter of the first annular section 80a is set in matching relation with the outer diameter of the cross-sectional shape of the third discharge flow passage 74, so as not to hinder discharging therefrom. The inner diameter of the second annular section 80c is set in matching relation with the outer diameter of the cross-sectional shape of the partition wall 52a of the tubular portion 52. On the outer circumference of the third sound absorbing member 80, a plurality of discharge ports 82a to 82d are formed, which open in directions (the directions of the arrows S shown in FIGS. 5 and 6) perpendicular to the direction of the third discharge flow passage 74.

As shown in FIG. 7, the silencer 100 according to the present invention is assembled by first sequentially installing the annular shaped third sound absorbing member 80, the cylindrical shaped first sound absorbing member 76, and the cup shaped second sound absorbing member 78 in this order along the partition wall 52a in the interior of the tubular portion 52, and thereafter, attaching the cap member 54. Disassembly of the silencer 100 is also easy to perform, and it is easy to replace the silencer 100 in component units thereof.

Next, operations and effects of the silencer 100 according to the present embodiment, which is configured in the manner described above, will be described. Moreover, operations and effects in portions other than the silencer 100 are the same as those in the above-described first embodiment, and detailed description thereof will be omitted.

In the silencer 100, when the fluid ejected from the ejector 12 is supplied to the first discharge flow passage 70, which is disposed along the axial direction of the tubular portion 52, the fluid moves straight forward (in the direction of the arrow P in FIG. 5) along the axial direction toward the cap member 54, while discharge sounds are absorbed by the first sound absorbing member 76 provided on the inner wall surface of the partition wall 52a of the tubular portion 52.

The fluid that has reached the cap member 54 passes through the curved second discharge flow passage 72, which is folded back on an opposite side of the cap member 54 (in the direction of the arrow Q in FIG. 5), and thereafter, flows into the third discharge flow passage 74. The fluid that has flowed into the third discharge flow passage 74 moves straight forward in a direction (the direction of the arrow R in FIG. 5) opposite to the direction of the first discharge flow passage 70, and the fluid is discharged in directions perpendicular to the axial direction of the tubular portion 52 (in the directions of the arrows S shown in FIGS. 5 and 6) from the discharge ports 82a to 82d, which are provided in the third sound absorbing member 80 positioned at the terminal end part of the third discharge flow passage 74.

In the silencer 100 according to the present embodiment, in comparison with the above-described first embodiment, the discharge flow passage (second discharge flow passage 72) is folded back on the opposite side of the cap member 54, and the interval over which the fluid (discharge gas) is in contact with the sound absorbing members (the first sound absorbing member 76, the second sound absorbing member 78, and the third sound absorbing member 80) becomes longer. Therefore, the sound absorbing power can be further enhanced. Further, the corner portions of the terminal end part 76a of the first sound absorbing member 76 and the terminal end part 53 of the partition wall 52a are formed respectively in rounded shapes, and the curved portion 78a of the second sound absorbing member 78 is formed in a curved shape. More specifically, between the terminal end part of the first discharge flow passage 70 and the starting end part of the third discharge flow passage 74, the discharge gas is capable of passing smoothly over the corner portions formed on the terminal end part 76a of the first sound absorbing member 76 and the terminal end part 53 of the partition wall 52a, and the curved portion 78a of the second sound absorbing member 78, and undergoes a change in direction (in the direction of the arrow Q in FIG. 5) toward the side of the third discharge flow passage 74. Therefore, the fluid can be smoothly discharged over the interval from the first discharge flow passage 70 to the third discharge flow passage 74.

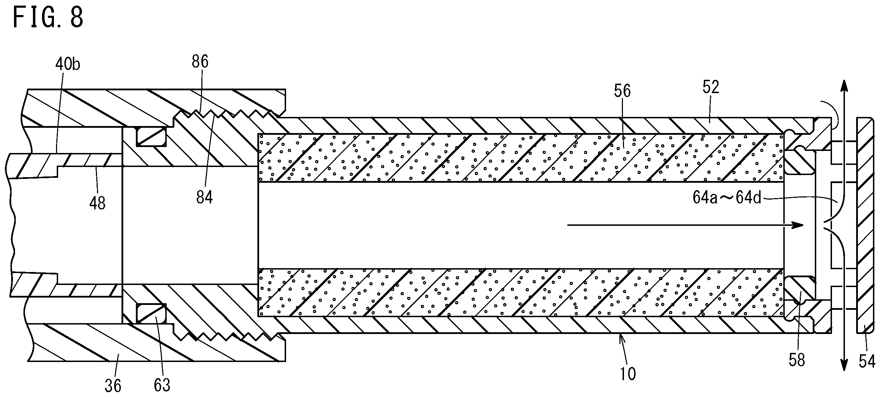

It is a matter of course that the silencer according to the present invention is not limited to the above-described embodiments, and various additional or modified configurations could be adopted therein without departing from the invention as defined in the appended claims. For example, in the above-described first embodiment, the silencer 10 is fixed to the ejector 12 via the clip member 62. However, as shown in FIG. 8, a female screw member 84 may be provided on the side of the ejector body 36, and a male screw member 86, which is screwed in and fixed to the female screw member 84, may be provided on the side of the silencer 10. In accordance with this feature, the silencer 10 can be easily attached and detached without requiring a connecting member such as the clip member 62. Further, in the two embodiments described above, cases have been described respectively in which the silencers 10, 100 are attached with respect to the ejector 12. However, the same effects can be obtained even if the silencers 10, 100 are attached to another fluid pressure device.

## Claims

1. A silencer (10) comprising:
a hollow tubular portion (52) in which a discharge flow passage (50) is formed that communicates, on one end side of the tubular portion (52), with a discharge port (48) of a fluid pressure device (12) through which a pressure fluid is discharged;
a cap member (54) attached to another end part of the hollow tubular portion (52);
a sound absorbing member (56) attached to an inner wall surface of the hollow tubular portion (52); and
a plurality of discharge ports (64a to 64d) adapted to discharge the pressure fluid, which has passed through the discharge flow passage (50) in an axial direction of the hollow tubular portion (52), in radial directions perpendicular to the axial direction,
wherein the cap member (54) includes the plurality of the discharge ports (64a to 64d),
**characterized in that** the cap member (54) further includes
a disk-shaped distal end part (54a),
prism-shaped parts (54b) that support the distal end part (54a) and are spaced equidistantly from each other in a circumferential direction,
an annular connecting part (54c) that supports the prism-shaped parts (54b) and is fitted into the hollow tubular portion (52), and
that the discharge ports (64a to 64d) are formed between the prism-shaped parts (54b).

2. The silencer (10) according to claim 1, wherein the plurality of discharge ports (64a to 64d) are oriented toward and open in the radial directions.

3. The silencer (10) according to claim 2, wherein a sound absorbing ring (58) having an opening with a diameter greater than an inner diameter of the sound absorbing member (56) is provided between the sound absorbing member (56) and the cap member (54).

4. A silencer (100) comprising:
a hollow tubular portion (52) in which a discharge flow passage is formed that communicates, on one end side of the tubular portion (52), with a discharge port (48) of a fluid pressure device (12) through which a pressure fluid is discharged;
a cap member (54) attached to another end part of the hollow tubular portion (52);
a sound absorbing member (76, 78, 80) attached to an inner wall surface of the hollow tubular portion (52); and
a plurality of discharge ports (82a to 82d) adapted to discharge the pressure fluid, which has passed through the discharge flow passage (50) in an axial direction of the hollow tubular portion (52), in radial directions perpendicular to the axial direction,
wherein the hollow tubular portion (52) includes a tubular partition wall (52a) that extends in the axial direction up to a vicinity of the cap member (54) and partitions the discharge flow passage; and
wherein the discharge flow passage is constituted from:
a first discharge flow passage (70), a starting end of which faces toward the discharge port (48), and which extends to the vicinity of the cap member (54) along a wall surface on an inner side of the partition wall (52a);
a second discharge flow passage (72) adapted to change a flow direction from a terminal end part of the first discharge flow passage (70) toward an outer side in the radial direction, and which is folded back on an opposite side of the cap member (54) in the axial direction along the inner wall surface of the cap member (54); and
a third discharge flow passage (74) that extends from a terminal end part of the second discharge flow passage (72) to the one end side of the hollow tubular portion (52) along a wall surface on an outer side of the partition wall (52a);
wherein the plurality of discharge ports (82a to 82d) are formed in a terminal end part of the third discharge flow passage (74).
wherein the sound absorbing member (76, 78, 80) is constituted from:
a first sound absorbing member (76) disposed along the first discharge flow passage (70) on a wall surface of an inner side in the radial direction of the partition wall (52a) of the hollow tubular portion (52);
a second sound absorbing member (78) disposed along the second discharge flow passage (72) and the third discharge flow passage (74); and
a third sound absorbing member (80) disposed in the terminal end part of the third discharge flow passage (74);
wherein the second sound absorbing member (78) includes a curved portion (78a) at a location corresponding to the terminal end part of the second discharge flow passage (72).

5. The silencer according to any one of claims 1 to 4, wherein:
the hollow tubular portion (52) includes a clip attachment part (60) formed in a groove shape on an outer circumferential surface thereof; and
the clip attachment part (60) engages a clip member (62) that is inserted into a hole formed in the fluid pressure device (12).

6. The silencer according to any one of claims 1 to 4, wherein the hollow tubular portion (52) includes a male screw member (86) which is screwed in and fixed with respect to a female screw member (84) formed in the fluid pressure device (12).

7. An ejector comprising:
an ejector body (36) formed with an internal space communicating with an air supply port (42) and a suction port (44b);
a nozzle (38) disposed in the internal space, and adapted to inject a pressure fluid supplied from the air supply port (42), and generate a negative pressure for sucking fluid from the suction port (44b);
a diffuser (40) provided in the internal space on a more downstream side than the nozzle (38), and having a discharge port (48) adapted to discharge the pressure fluid together with the fluid; and
a silencer (10, 100) according to any one of the preceding claims facing toward the discharge port (48), and which is attached to the ejector body (36).

## Patentansprüche

1. Ein Schalldämpfer (10) mit:
einem hohlen rohrförmigen Abschnitt (52), in dem ein Auslassströmungsdurchgang (50) ausgebildet ist, der an einer Endseite des rohrförmigen Abschnitts (52) mit einem Auslassanschluss (48) einer Fluiddruckvorrichtung (12), durch den ein Druckfluid abgeführt wird, kommuniziert,
einem Kappenelement (54), das an einem anderen Endabschnitt des hohlförmigen Rohrabschnitts (52) angebracht ist,
einem Schalldämpfungselement (56), das an einer inneren Wandfläche des hohlen rohrförmigen Abschnitts (52) angebracht ist, und
mehreren Auslassöffnungen (64a bis 64d), die dazu ausgestaltet sind, das Druckfluid, das durch den Auslassströmungsdurchgang (50) in einer axialen Richtung des hohlen rohrförmigen Abschnitts (52) hindurchgetreten ist, in radialen Richtungen senkrecht zu der axialen Richtung abzuführen,
wobei das Kappenelement (54) mehrere der Auslassöffnungen (64a bis 64d) aufweist,
**dadurch gekennzeichnet, dass** das Kappenelement (54) außerdem aufweist
einen scheibenförmigen distalen Endabschnitt (54a),
prismenförmige Abschnitte (54b), die den distalen Endabschnitt (54a) stützen und in gleichem Abstand voneinander in einer Umfangsrichtung beabstandet sind,
einen ringförmigen Verbindungsabschnitt (54c), der die prismenförmigen Abschnitte (54b) stützt und in den hohlen rohrförmigen Abschnitt (52) eingesetzt ist, und
dass die Auslassöffnungen (54a bis 54d) zwischen den prismenförmigen Abschnitten (54b) ausgebildet sind.

2. Der Schalldämpfer (10) nach Anspruch 1, wobei die mehreren Auslassöffnungen (54a bis 54d) sich in den radialen Richtungen orientieren und öffnen.

3. Der Schalldämpfer (10) nach Anspruch 2, wobei ein Schalldämpfungsring (58), der eine Öffnung mit einem größeren Durchmesser als einem Innendurchmesser des Schalldämpfungselement (65) aufweist, zwischen dem Schalldämpfungselement (56) und dem Kappenelement (54) vorgesehen ist.

4. Ein Schalldämpfer (100) mit:
einem hohlen rohrförmigen Abschnitt (52), in dem ein Auslassströmungsdurchgang ausgebildet ist, der an einer Endseite des rohrförmigen Abschnitts (52) mit einer Auslassöffnung (58) einer Fluiddruckvorrichtung (12), durch welche ein Druckfluid abgeführt wird, kommuniziert,
einem Kappenelement (54), das an einem anderen Endabschnitt des hohlen rohrförmigen Abschnitts (52) angebracht ist,
einem Schalldämpfungselement (76, 78, 80), das an einer inneren Wandfläche des hohlen rohrförmigen Abschnitts (52) angebracht ist, und
mehreren Auslassöffnungen (82a bis 82d), die dazu ausgestaltet sind, das Druckfluid, das durch den Auslassströmungsdurchgang (50) in einer axialen Richtung des hohlen rohrförmigen Elements (52) hindurchgetreten ist, in radialen Richtungen senkrecht zu der axialen Richtung abzuführen,
wobei der hohle rohrförmige Abschnitt (52) eine rohrförmige Trennwand (52a) aufweist, die sich in der axialen Richtung bis in die Nähe des Kappenelements (54) erstreckt und den Auslassströmungsdurchgang teilt, und
wobei der Auslassströmungsdurchgang gebildet wird durch:
einen ersten Auslassströmungsdurchgang (70), dessen Startende der Auslassöffnung (48) zugewandt ist und der sich bis in die Nähe des Kappenelements (54) entlang einer Wandfläche an einer Innenseite der Trennwand (52a) erstreckt,
einen zweiten Auslassströmungsdurchgang (72), der dazu ausgestaltet ist, eine Strömungsrichtung von einem hinteren Endabschnitt des ersten Auslassströmungsdurchgangs (70) zu einer Außenseite in der radialen Richtung zu ändern, und der an einer dem Kappenelement (54) entgegengesetzten Seite in der axialen Richtung entlang der Innenwandfläche des Kappenelements (54) zurückgefaltet ist, und
einen dritten Auslassströmungsdurchgang (74), der sich von einem hinteren Endabschnitt des zweiten Auslassströmungsdurchgangs (72) zu der einen Endseite des hohlen rohrförmigen Abschnitts (52) entlang einer Wandfläche an einer Außenseite der Trennwand (52a) erstreckt,
wobei die mehreren Auslassöffnungen (82a bis 82d) in einem hinteren Endabschnitt des dritten Auslassströmungsdurchgangs (74) ausgebildet sind, wobei das Schalldämpfungselement (76, 78, 80) gebildet wird durch:
ein erstes Schalldämpfungselement (76), das entlang des ersten Auslassströmungsdurchgangs (70) an einer Wandfläche an einer Innenseite in der radialen Richtung der Trennwand (52a) des hohlen rohrförmigen Abschnitts (52) vorgesehen ist,
ein zweites Schalldämpfungselement (78), das entlang des zweiten Auslassströmungsdurchgangs (72) und des dritten Auslassströmungsdurchgangs (74) vorgesehen ist, und
ein drittes Schalldämpfungselement (80), das in dem hinteren Endabschnitt des dritten Auslassströmungsdurchgangs (74) vorgesehen ist,
wobei das zweite Schalldämpfungselement (78) einen gekrümmten Abschnitt (78a) an einer Position aufweist, die den hinteren Endabschnitt des zweiten Auslassströmungsdurchgangs (72) zugeordnet ist.

5. Der Schalldämpfer nach einem der Ansprüche 1 bis 4, wobei der hohle rohrförmige Abschnitt (52) einen Clipbefestigungsabschnitt (60) aufweist, der nutenförmig an seiner äußeren Umfangsfläche ausgebildet ist, und
wobei der Clipbefestigungsabschnitt (60) an einem Clipelement (62) angreift, das in eine in der Fluiddruckvorrichtung (12) ausgebildete Öffnung eingesetzt ist.

6. Der Schalldämpfer nach einem der Ansprüche 1 bis 4, wobei der hohle rohrförmige Abschnitt (52) ein Außengewindeelement (86) aufweist, das in ein Innengewindeelement (84), das in der Fluiddruckvorrichtung (12) ausgebildet ist, eingeschraubt und an diesem fixiert ist.

7. Ein Ejektor mit:
einem Ejektorkörper (36), der in einem Innenraum ausgebildet ist, der mit einem Luftzufuhranschluss (42) und einem Sauganschluss (44b) kommuniziert,
einer Düse (38), die in dem Innenraum vorgesehen und dazu ausgestaltet ist, ein Druckfluid, das von dem Luftzufuhranschluss (42) zugeführt wird, einzuspritzen und einen Unterdruck zum Ansaugen von Fluid aus dem Sauganschluss (44b) zu erzeugen,
einem Diffusor (40), der in dem Innenraum weiter stromabwärts als die Düse (38) vorgesehen ist und eine Auslassöffnung (48) aufweist, die dazu ausgestaltet ist, das Druckfluid zusammen mit dem Fluid abzuführen, und
einem Schalldämpfer (10. 100), gemäß einem der vorhergehenden Ansprüche, der der Auslassöffnung (48) zugewandt ist und der an dem Ejektorkörper (36) angebracht ist.

## Revendications

1. Silencieux (10) comprenant :
une partie tubulaire creuse (52) dans laquelle un passage d'écoulement de décharge (50) est formé qui communique, sur un côté d'extrémité de la partie tubulaire (52), avec un port de décharge (48) d'un dispositif hydraulique (12) à travers lequel un fluide sous pression est déchargé ;
un membre de bouchon (54) fixé à une autre pièce d'extrémité de la partie tubulaire creuse (52) ;
un membre absorbant acoustique (56) fixé à une surface de paroi intérieure de la partie tubulaire creuse (52) ; et
une pluralité de ports de décharge (64a à 64d) adaptés pour décharger le fluide sous pression qui est passé au travers du passage d'écoulement de décharge (50) dans une direction axiale de la partie tubulaire creuse (52) dans des directions radiales perpendiculaires à la direction axiale,
dans lequel le membre de bouchon (54) inclut la pluralité des ports de décharge (64a à 64d),
**caractérisé en ce que** le membre de bouchon (54) inclut en outre
une pièce d'extrémité distale (54a) en forme de disque, des pièces en forme de prisme (54b) qui supportent la pièce d'extrémité distale (54a) et sont espacées à équidistance l'une de l'autre dans une direction circonférentielle,
une pièce de connexion annulaire (54c) qui supporte les pièces en forme de prisme (54b) et est logée à l'intérieur de la partie tubulaire creuse (52), et
que les ports de décharge (64a à 64d) sont formés entre les pièces en forme de prisme (54b).

2. Silencieux (10) selon la revendication 1, dans lequel la pluralité de ports de décharge (64a à 64d) est orientée en direction des, et ouverte dans les, directions radiales.

3. Silencieux (10) selon la revendication 2, dans lequel un anneau absorbant acoustique (58) ayant une ouverture avec un diamètre supérieur à un diamètre intérieur du membre absorbant acoustique (56) est prévu entre le membre absorbant acoustique (56) et le membre de bouchon (54) .

4. Silencieux (100) comprenant :
une partie tubulaire creuse (52) dans laquelle un passage d'écoulement de décharge (50) est formé qui communique, sur un côté d'extrémité de la partie tubulaire (52), avec un port de décharge (48) d'un dispositif hydraulique (12) à travers lequel un fluide sous pression est déchargé ;
un membre de bouchon (54) fixé à une autre pièce d'extrémité de la partie tubulaire creuse (52) ;
un membre absorbant acoustique (76, 78, 80) fixé à une surface de paroi intérieure de la partie tubulaire creuse (52) ; et
une pluralité de ports de décharge (82a à 82d) adaptés pour décharger le fluide sous pression qui est passé au travers du passage d'écoulement de décharge (50) dans une direction axiale de la partie tubulaire creuse (52) dans des directions radiales perpendiculaires à la direction axiale,
dans lequel la partie tubulaire creuse (52) inclut une cloison de séparation tubulaire (52a) qui s'étend dans la direction axiale jusqu'à un voisinage du membre de bouchon (54) et cloisonne le passage d'écoulement de décharge ; et
dans lequel le passage d'écoulement de décharge est constitué :
d'un premier passage d'écoulement de décharge (70) dont une extrémité de départ fait face au port de décharge (48) et qui s'étend jusque vers le voisinage du membre de bouchon (54) le long d'une surface de paroi sur un côté intérieur de la cloison de séparation (52a) ;
un deuxième passage d'écoulement de décharge (72) adapté pour changer une direction d'écoulement venant d'une pièce d'extrémité terminale du premier passage d'écoulement de décharge (70) vers un côté extérieur dans la direction radiale, et qui est replié sur un côté opposé du membre de bouchon (54) dans la direction axiale le long de la surface de paroi intérieure du membre de bouchon (54) ; et
un troisième passage d'écoulement de décharge (74) qui s'étend d'une pièce d'extrémité terminale du deuxième passage d'écoulement de décharge (72) vers l'un côté d'extrémité de la partie tubulaire creuse (52) le long d'une surface de paroi sur un côté extérieur de la cloison de séparation (52a) ;
dans lequel la pluralité de ports de décharge (82a à 82d) sont formés dans une pièce d'extrémité terminale du troisième passage d'écoulement de décharge (74),
dans lequel le membre absorbant acoustique (76, 78, 80) est constitué :
d'un premier membre d'absorption acoustique (76) disposé le long du premier passage d'écoulement de décharge (70) sur une surface de paroi d'un côté intérieur dans la direction radiale de la cloison de séparation (52a) de la partie tubulaire creuse (52) ;
d'un second membre absorbant acoustique (78) disposé le long du deuxième passage d'écoulement de décharge (72) et du troisième passage d'écoulement de décharge (74) ; et
un troisième membre d'absorption acoustique (80) disposé dans la pièce d'extrémité terminale du troisième passage d'écoulement de décharge (74) ;
dans lequel le second membre absorbant acoustique (78) inclut une pièce incurvée (78a) à un emplacement correspondant à la pièce d'extrémité terminale du deuxième passage d'écoulement de décharge (72).

5. Silencieux selon l'une quelconque des revendications 1 à 4, dans lequel :
la partie tubulaire creuse (52) inclut une pièce de fixation à clip (60) formée dans une forme de rainure sur une surface circonférentielle de celle-ci ; et
la pièce de fixation à clip (60) engage un membre de clip (62) qui est inséré jusque dans un trou formé dans le dispositif hydraulique (12).

6. Silencieux selon l'une quelconque des revendications 1 à 4, dans lequel la partie tubulaire creuse (52) inclut membre de vis mâle (86) qui est vissé dans et fixé par rapport à un membre de vis femelle (84) formé dans le dispositif hydraulique (12).

7. Éjecteur, comprenant :
un corps d'éjecteur (36) formé avec un espace intérieur communiquant avec un port de fourniture d'air (42) et un port d'aspiration (44b) ;
une buse (38) disposée dans l'espace intérieur, et adaptée pour injecter un fluide sous pression fourni par le port de fourniture d'air (42), et générer une pression négative pour aspirer du fluide venant du port d'aspiration (44b) ;
un diffuseur (40) prévu dans l'espace intérieur sur un côté plus en aval que la buse (38), et ayant un port de décharge (48) adapté pour décharger le fluide sous pression conjointement avec le fluide ; et
un silencieux (10, 100) selon l'une quelconque des revendications précédentes, orienté face au port de décharge (48) et qui est fixé au corps d'éjecteur (36).
